(19) Europäisches Patentamt
European Patent Office
Office européen des brevets

(11) **EP 4 055 848 B1**

(12) **EUROPÄISCHE PATENTSCHRIFT**

(45) Veröffentlichungstag und Bekanntmachung des Hinweises auf die Patenterteilung:
**12.07.2023 Patentblatt 2023/28**

(21) Anmeldenummer: **20781347.8**

(22) Anmeldetag: **25.09.2020**

(51) Internationale Patentklassifikation (IPC):
**H04W 4/40** *(2018.01)*  **H04W 28/02** *(2009.01)*
**H04W 8/04** *(2009.01)*  **H04W 40/22** *(2009.01)*

(52) Gemeinsame Patentklassifikation (CPC):
**H04W 4/40; H04W 8/04; H04W 28/0289; H04W 40/22**

(86) Internationale Anmeldenummer:
**PCT/EP2020/076923**

(87) Internationale Veröffentlichungsnummer:
**WO 2021/089237 (14.05.2021 Gazette 2021/19)**

(54) **VERFAHREN ZUM ÜBERTRAGEN EINER NACHRICHT IN EINEM KOMMUNIKATIONSNETZWERK ZUR KOMMUNIKATION ZWISCHEN EINEM VERKEHRSTEILNEHMER UND MINDESTENS EINEM WEITEREN VERKEHRSTEILNEHMER**

METHOD FOR TRANSMITTING A MESSAGE IN A COMMUNICATIONS NETWORK FOR COMMUNICATION BETWEEN A ROAD USER AND AT LEAST ONE OTHER ROAD USER

PROCÉDÉ DE TRANSMISSION D'UN MESSAGE DANS UN RÉSEAU DE COMMUNICATION POUR LA COMMUNICATION ENTRE UN USAGER DE LA ROUTE ET AU MOINS UN AUTRE USAGER DE LA ROUTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2019 DE 102019216916**

(43) Veröffentlichungstag der Anmeldung:
**14.09.2022 Patentblatt 2022/37**

(73) Patentinhaber: **Robert Bosch GmbH**
**70442 Stuttgart (DE)**

(72) Erfinder:
• **FUCHS, Hendrik**
  **31141 Hildesheim (DE)**
• **LLATSER MARTI, Ignacio**
  **31135 Hildesheim (DE)**
• **DOLGOV, Maxim**
  **71272 Renningen (DE)**
• **SCHIEGG, Florian Alexander**
  **31139 Hildesheim (DE)**
• **HOFMANN, Frank**
  **31139 Hildesheim (DE)**
• **WILDSCHUETTE, Florian**
  **31139 Hildesheim (DE)**
• **MICHALKE, Thomas**
  **71263 Weil Der Stadt (DE)**

(56) Entgegenhaltungen:
**WO-A1-2018/182591    WO-A1-2019/160176**

**Beschreibung**

Gebiet der Erfindung

Die Erfindung betrifft ein Verfahren, eine Auswerteeinheit, ein Computerprogramm und ein computerlesbares Medium zum Übertragen einer Nachricht in einem Kommunikationsnetzwerk zur Kommunikation zwischen einem Verkehrsteilnehmer und mindestens einem weiteren Verkehrsteilnehmer.

Stand der Technik

Fahrzeug-zu-Infrastruktur-Kommunikation (V2I) und Fahrzeug-zu-Fahrzeug-Kommunikation (V2V), zusammenfassend auch als Fahrzeug-zu-X-Kommunikation (V2X) bezeichnet, ermöglichen es Fahrzeugen und sogenannten Road Side Units (RSU), drahtlos miteinander zu kommunizieren. Dabei können beispielsweise Fahrdynamikdaten wie Position oder Geschwindigkeit oder Informationen über eine Umgebung eines Fahrzeugs ausgetauscht werden.

Als besonders vielversprechend gilt eine Anwendung von V2X-Kommunikation im Zusammenhang mit Fahrassistenzsystemen zum automatisierten Fahren.

Technologien wie beispielsweise Collective Perception ("kollektive Wahrnehmung"), d. h. ein Teilen von Informationen über Objekte, die von einer Bordsensorik eines Fahrzeugs erkannt wurden, mit benachbarten Fahrzeugen, und eine auf einem Austausch voraussichtlicher Fahrzeugtrajektorien beruhende Koordination von Fahrzeugmanövern können Sicherheitsniveau, Fahrkomfort und Verkehrseffizienz steigern, siehe hierzu auch: Laurens Hobert et al., "Enhancements of V2X communication in support of cooperative autonomous driving", IEEE Communications Magazine 53(12), S. 64-70, 2015.

Kooperative Fahrfunktionen erfordern eine Übertragung neuer Arten von V2X-Nachrichten wie etwa der Collective Perception Message (CPM) und der Maneuver Coordination Message (MCM), die derzeit vom Ausschuss des Europäischen Instituts für Telekommunikationsnormen (ETSI) zur Standardisierung vorgeschlagen werden. Diese Nachrichten enthalten typischerweise obligatorische Felder, die in jeder Nachricht enthalten sein müssen, etwa einen Header, und einige optionale Felder, die nach bestimmten Regeln in eine Nachricht aufgenommen werden können. Dies betrifft beispielweise erkannte Objekte in einer CPM oder Fahrzeugtrajektorien in einer MCM.

Eine Übertragung von V2X-Nachrichten für kooperatives Fahren kann zu einer erhöhten Belastung eines V2X-Funkkanals führen. Bei Verwendung der ITS-G5-Technologie, die in der EU für die V2X-Kommunikation standardisiert wurde, kann eine Kanalüberlastung zu einer verringerten Kommunikationsleistung, d. h. zu einer höheren Paketfehlerrate und höheren Latenzen, führen.

Um eine Überlastung des V2X-Funkkanals zu verhindern, kann ein sogenanntes DCC-Protokoll (DCC = Distributed Congestion Control) zur Nachrichtenübertragung verwendet werden. Ziel des DCC-Protokolls ist es, die Netzwerkstabilität, die Durchsatzleistung und die Zuweisung von Ressourcen zu beteiligten Netzwerkstationen zu optimieren.

DE 11 2017 007 365 T5 beschreibt ein Verfahren zur Übertragung von V2X-Nachrichten in einem V2X-Kommunikationsnetzwerk. Dabei kann eine Prioritätssektion von einer Nichtprioritätssektion innerhalb einer V2X-Nachricht unterschieden werden. Abhängig von aktuellen Kommunikationsbedingungen kann die V2X-Nachricht in eine Prioritätsnachricht, die nur die Prioritätssektion umfassen kann, und eine Nichtprioritätsnachricht, die nur die Nichtprioritätssektion umfassen kann, aufgeteilt werden. Die Prioritätsnachricht kann dann über eine entsprechende Prioritätsschnittstelle in dem V2X-Kommunikationsnetzwerk versendet werden.

WO 2019/160176 A1 beschreibt ein weiteres Verfahren zur Übertragung von V2X-Nachrichten in einem V2X-Kommunikationsnetzwerk. Hierbei kann eine maximale Paketgröße abhängig von einem Auslastungsgrad des V2X-Kommunikationsnetzwerkes festgelegt werden. Eine zu übertragende V2X-Nachricht kann dann je nach maximaler Paketgröße in entsprechende Nachrichtensegmente aufgeteilt werden.

Offenbarung der Erfindung

Vor diesem Hintergrund werden mit dem hier vorgestellten Ansatz ein Verfahren, eine Auswerteeinheit, ein Computerprogramm und ein computerlesbares Medium zum Übertragen einer Nachricht in einem Kommunikationsnetzwerk zur Kommunikation zwischen einem Verkehrsteilnehmer und mindestens einem weiteren Verkehrsteilnehmer gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

Vorteile der Erfindung

Ausführungsformen der vorliegenden Erfindung ermöglichen es in vorteilhafter Weise, Nachrichten in einem V2X-Kommunikationsnetzwerk unter Ausführungsformen der vorliegenden Erfindung ermöglichen es in vorteilhafter Weise, Nachrichten in einem V2X-Kommunikationsnetzwerk unter Berücksichtigung ihrer jeweiligen Relevanz für beteiligte Fahrzeuge oder Verkehrsteilnehmer und unter Berücksichtigung einer aktuellen Netzwerkauslastung zu übertragen. Dadurch, dass eine Übertragung abhängig von einem Nachrichteninhalt gesteuert wird, kann beispielsweise verhindert werden, dass Nachrichten mit hoher Priorität, etwa eine Warnung vor einer potenziell bevorstehenden Kollision mit einem Fußgänger, verworfen werden, während Nachrichten mit niedriger Priorität übertragen werden, etwa eine Position und Geschwindigkeit eines Fahrzeugs, das auf einer Autobahn in entgegengesetzter Richtung fährt. Anders ausgedrückt können somit bei hoher Netzwerkauslastung mehr Nachrichten mit höherer Priorität übertragen werden, indem gleichzeitig weniger Nachrichten mit niedriger Priorität übertragen werden.

Ein erster Aspekt der Erfindung betrifft ein Verfahren zum Übertragen einer Nachricht in einem Kommunikationsnetzwerk zur Kommunikation zwischen einem Verkehrsteilnehmer und mindestens einem weiteren Verkehrsteilnehmer. Der Verkehrsteilnehmer und der weitere Verkehrsteilnehmer weisen je eine Auswerteeinheit zum Übertragen von Nachrichten über das Kommunikationsnetzwerk auf. Das Verfahren umfasst folgende Schritte, die insbesondere in der angegebenen Reihenfolge ausgeführt werden können: Empfangen einer ersten Nachricht in der Auswerteeinheit, wobei die erste Nachricht Nachrichtensegmente mit je einem Prioritätswert; Bestimmen einer aktuellen Auslastung des Kommunikationsnetzwerkes; Ausfiltern von zu übertragenden Nachrichtensegmenten aus der ersten Nachricht basierend auf den Prioritätswerten und der aktuellen Auslastung des Kommunikationsnetzwerkes; und Erzeugen einer zweiten Nachricht mit den zu übertragenden Nachrichtensegmenten und Senden der zweiten Nachricht über das Kommunikationsnetzwerk.

Unter einem Verkehrsteilnehmer kann beispielsweise ein Kraftfahrzeug, etwa ein Pkw, Lkw, Bus oder ein Motorrad, ein Element einer Verkehrsinfrastruktur, auch Roadside Unit genannt, ein Fahrrad, ein Tretroller oder ein Fußgänger verstanden werden.

Unter einem Kommunikationsnetzwerk kann ein Netzwerk zur Verkehrsvernetzung, beispielsweise von Fahrzeug zu Fahrzeug (V2V oder Car2Car), von Fahrzeug zu Straße (V2R), von Fahrzeug zu Infrastruktur (V2I), von Fahrzeug zu Netzwerk (V2N) oder von Fahrzeug zu Personen (V2P), verstanden werden. Beispielsweise können Nachrichten zwischen Teilnehmern des Kommunikationsnetzwerkes über eine drahtlose Kommunikationsverbindung wie etwa eine WLAN-, Bluetooth- oder Mobilfunkverbindung übertragen werden.

Es ist möglich, dass die Verkehrsteilnehmer jeweils eine Sensorik zum Erfassen ihrer Umgebung aufweisen. Die Sensorik kann beispielsweise eine Kamera, einen Radar- oder Lidarsensor umfassen. Dabei kann die Auswerteeinheit ausgeführt sein, um basierend auf durch die Sensorik erzeugten Sensordaten Objekte zu erkennen und/oder den betreffenden Verkehrsteilnehmer, etwa ein Fahrzeug, entsprechend den erkannten Objekten zu steuern, d. h. durch Ansteuern einer entsprechenden Aktorik zu lenken, zu bremsen und/oder zu beschleunigen. Beispielsweise kann die Auswerteeinheit ausgeführt sein, um den Verkehrsteilnehmer basierend auf von anderen Verkehrsteilnehmern bereitgestellten und über das Kommunikationsnetzwerk empfangenen Nachrichten zu steuern.

Bei einem erkannten Objekt kann es sich beispielsweise auch um eine Trajektorie eines benachbarten Verkehrsteilnehmers oder eine Manöverinformation auf Basis mindestens einer möglichen Trajektorie des Verkehrsteilnehmers und/oder mindestens einer möglichen Trajektorie mindestens eines benachbarten Verkehrsteilnehmers handeln.

Beispielsweise kann einem erkannten Objekt ein Prioritätswert zugeordnet werden, der eine Relevanz des erkannten Objekts für den betreffenden Verkehrsteilnehmer und/oder weitere Verkehrsteilnehmer anzeigt. Diese Zuordnung kann beispielsweise durch ein Umgebungsmodell erfolgen, das Objekte in der Umgebung als Objektmodelle speichert und basierend auf den Sensordaten fortlaufend aktualisiert. Beispielsweise kann das Umgebungsmodell anhand einer Position, Lage, Geschwindigkeit, Trajektorie oder Objektklasse des Objekts die Relevanz des Objekts bestimmen und diese Relevanz durch Berechnung eines entsprechenden Prioritätswertes quantifizieren.

Eine in dem Kommunikationsnetzwerk zu übertragende Nachricht kann als eine V2X-Nachricht für kooperatives Fahren, beispielsweise eine CPM oder MCM, aufgefasst werden. Eine solche Nachricht kann neben einem Header ein oder mehrere Nachrichtensegmente enthalten. Die Nachrichtensegmente können im Gegensatz zum Header optional sein. Beispielsweise ist es möglich, dass jedes Nachrichtensegment ein erkanntes Objekt beschreibt, etwa dessen Position, Lage, Geschwindigkeit, Größe oder Objektklasse, und durch den Prioritätswert des erkannten Objekts gekennzeichnet ist. Die einzelnen Nachrichtensegmente einer Nachricht können sich in ihrem Prioritätswert voneinander unterscheiden. Ferner kann die Nachricht Informationen über voraussichtliche Trajektorien, einen Lenkwinkel, eine Position, eine Richtung oder eine Geschwindigkeit des Verkehrsteilnehmers enthalten. Zusätzlich können Sichtfeld oder Reichweite der Sensorik in der Nachricht beschrieben sein.

Ein zweiter Aspekt der Erfindung betrifft eine Auswerteeinheit, die ausgeführt ist, um das Verfahren, wie es im Vorangehenden und im Folgenden beschrieben ist, durchzuführen. Merkmale des Verfahrens, wie es im Vorangehenden und im Folgenden beschrieben ist, können auch Merkmale der Auswerteeinheit sein.

Weitere Aspekte der Erfindung betreffen ein Computerprogramm, das, wenn es auf einem Prozessor ausgeführt wird, das Verfahren, wie es im Vorangehenden und im Folgenden beschrieben ist, durchführt, sowie ein computerlesbares Medium, auf dem ein derartiges Computerprogramm gespeichert ist.

Bei dem computerlesbaren Medium kann es sich beispielsweise um eine Festplatte, ein USB-Speichergerät, einen RAM, ROM, EPROM oder Flash-Speicher handeln. Das computerlesbare Medium kann auch ein einen Download eines Programmcodes ermöglichendes Datenkommunikationsnetzwerk wie etwa das Internet sein. Das computerlesbare Medium kann transitorisch oder nicht transitorisch sein.

Merkmale des Verfahrens, wie es im Vorangehenden und im Folgenden beschrieben ist, können auch Merkmale des Computerprogramms und/oder des computerlesbaren Mediums sein.

Ideen zu Ausführungsformen der vorliegenden Erfindung können unter anderem als auf den nachfolgend beschriebenen Gedanken und Erkenntnissen beruhend angesehen werden.

Ein DCC-Protokoll, wie es derzeit für die V2X-Kommunikation verwendet wird, steuert hauptsächlich eine Nachrichtenübertragungsrate, d. h. eine Übertragung von Nachrichten basierend auf einer gemessenen Kanalbelegungsrate, siehe hierzu auch: ETSI TS 102 687 V1.2.1, Intelligent Transport Systems (ITS); Decentralized Congestion Control Mechanisms for Intelligent Transport Systems operating in the 5 GHz range; Access layer part. ETSI TS 103 175 V1.1.1, Intelligent Transport Systems (ITS); Cross Layer DCC Management Entity for operation in the ITS G5A and ITS G5B medium. ETSI TR 101 612 V1.1.1, Intelligent Transport Systems (ITS); Cross Layer DCC Management Entity for operation in the ITS G5A and ITS G5B medium; Report on Cross layer DCC algorithms and performance evaluation.

Die Hauptkomponente dieses DCC-Protokolls ist ein Gatekeeper, der sich zwischen einer Zugriffsschicht und einer Vermittlungsschicht befindet, die zu übertragenden Nachrichten nach ihrer Priorität in Warteschlangen einordnet und die Nachrichtenübertragungsrate abhängig von einer gemessenen Kanalbelegungsrate begrenzt. Die Nachrichtenübertragungsrate wird dabei unabhängig von einer jeweiligen Art und einem jeweiligen Inhalt der Nachrichten begrenzt.

Im Gegensatz zu aktuellen DCC-Algorithmen, die jede V2X-Nachricht als Black Box betrachten, wird gemäß dem hier beschriebenen Ansatz eine Liste von Nachrichtensegmenten mit Übertragungsprioritäten generiert. Diese Liste kann beispielsweise von einem Collective Perception Service oder einem Maneuver Coordination Service bereitgestellt werden. Die Nachrichtensegmente entsprechen beispielsweise den weiter erwähnten optionalen Feldern einer Nachricht. Beispielsweise kann dann durch ein DCC-Protokoll entschieden werden, welche der Nachrichtensegmente in einer Nachricht übertragen werden sollen und welche nicht.

Eine Übertragungspriorität eines Nachrichtensegments kann beispielsweise von einer Anwendung basierend auf einem funktionalen Nutzen des Nachrichtensegments berechnet und als Eingabe für ein DCC-Protokoll bereitgestellt werden. Beispiele für funktional nützliche Nachrichtensegmente sind erkannte Objekte mit hoher Dynamik oder bevorzugte Fahrzeugtrajektorien.

Denkbar ist beispielsweise, dass das DCC-Protokoll anhand der Liste der Nachrichtensegmente und eines Kanalzustands auswählt, welche der Nachrichtensegmente (falls vorhanden) übertragen werden sollen, und das Ergebnis an die Anwendung zurückgibt. Die Anwendung erstellt dann eine V2X-Nachricht basierend auf den zur Übertragung ausgewählten Nachrichtensegmenten und leitet die V2X-Nachricht an eine Vermittlungsschicht weiter.

Mit gegenwärtigen DCC-Algorithmen kann eine effiziente Kanalnutzung kaum erreicht werden, sofern für das kooperative Fahren erforderliche V2X-Nachrichten auf ein und demselben Kanal übertragen werden, siehe hierzu auch: Hendrik-Jorn Günther, et al. "Collective perception and decentralized congestion control in vehicular ad-hoc networks", IEEE Vehicular Networking Conference (VNC) 2016.

Beispielsweise berücksichtigen aktuelle DCC-Protokolle nicht den Inhalt der Nachrichten. Demzufolge sind sie nicht in der Lage, wichtige von weniger wichtigen Nachrichten zu unterscheiden oder bestimmte Nachrichten gegenüber anderen Nachrichten bevorzugt zu übertragen. Zu aktuellen DCC-Protokollen siehe auch: M. Sepulcre, J. Mittag, P. Santi, H. Hartenstein and J. Gozalvez, "Congestion and Awareness Control in Cooperative Vehicular Systems", in Proceedings of the IEEE, Vol. 99, No. 7, S. 1260-1279, Juli 2011. Bengi Aygun, Mate Boban, Alexander M. Wyglinski, "ECPR: Environment- and context-aware combined power and rate distributed congestion control for vehicular communications", Computer Communications, Vol. 93, S. 3-16, 2016. C. B. Math, A. Ozgur, S. H. de Groot and H. Li, "Data Rate based Congestion Control in V2V communication for traffic safety applications", 2015 IEEE Symposium on Communications and Vehicular Technology in the Benelux (SCVT), Luxembourg City, 2015, S. 1-6.

Der hier beschriebene Ansatz ermöglicht hingegen ein prioritätsbasiertes Auswählen zu übertragender Nachrichtensegmente, um einen guten Kompromiss zwischen funktionalem Nutzen und Kanallast zu erzielen. Dabei werden für jede Nachricht bevorzugt Nachrichtensegmente mit hoher Priorität ausgewählt. Gleichzeitig kann sichergestellt werden, dass die Funkkanallast unter einem bestimmten Schwellenwert bleibt.

Gemäß einer Ausführungsform kann das Verfahren weiter umfassen: Bestimmen einer maximalen Nachrichtengröße einer zu übertragenden Nachricht abhängig von der aktuellen Auslastung des Kommunikationsnetzwerkes und Bestimmen eines Prioritätsschwellenwertes abhängig von der aktuellen Auslastung des Kommunikationsnetzwerkes und/oder basierend auf Prioritätswerten zuletzt übertragener Nachrichtensegmente; Ausfiltern der zu übertragenden Nachrichtensegmente aus der ersten Nachricht basierend auf der maximalen Nachrichtengröße und dem Prioritätsschwellenwert. Mit anderen Worten kann der Prioritätsschwellenwert von Nachricht zu Nachricht variieren und für jede zu übertragende Nachricht auf Basis einer oder mehrerer vorhergehender Nachrichten neu berechnet werden. Dadurch kann der Prioritätsschwellenwert kontinuierlich an sich ändernde Situationen in der Umgebung des Verkehrsteilnehmers wie auch an zeitliche Schwankungen der Netzwerkauslastung angepasst werden.

Gemäß einer Ausführungsform kann eine Filterliste zu filternder Nachrichtensegmente erstellt werden. Dabei können die Prioritätswerte der Nachrichtensegmente jeweils mit dem Prioritätsschwellenwert verglichen werden. Die Filterliste kann durch Entfernen von Nachrichtensegmenten, deren Prioritätswert unter dem Prioritätsschwellenwert liegt, verkürzt werden. Die zu übertragenden Nachrichtensegmente können dann aus der verkürzten Filterliste unter Berücksichtigung der maximalen Nachrichtengröße ausgewählt werden. Dadurch kann das Ausfiltern zweistufig erfolgen, wodurch die Effizienz des Verfahrens erhöht werden kann.

Gemäß einer Ausführungsform kann das Verfahren ferner folgende Schritte umfassen, die bevorzugt in der angegebenen Reihenfolge ausgeführt werden können: Auswählen eines Nachrichtensegments mit dem höchsten Prioritätswert aus der verkürzten Filterliste; Ermitteln einer Nachrichtensegmentgröße des ausgewählten Nachrichtensegments; Vergleichen der Nachrichtensegmentgröße mit der maximalen Nachrichtengröße; wenn die Nachrichtensegmentgröße kleiner als die maximale Nachrichtengröße ist: Hinzufügen des ausgewählten Nachrichtensegments zu einer Übertragungsliste zu übertragender Nachrichtensegmente; Entfernen des ausgewählten Nachrichtensegments von der verkürzten Filterliste; Reduzieren der maximalen Nachrichtengröße um die Nachrichtensegmentgröße. Die Schritte des Auswählens, Ermittelns, Vergleichens, Hinzufügens, Entfernens und Reduzierens können zyklisch wiederholt werden, bis die Nachrichtensegmentgröße kleiner oder gleich der maximalen Nachrichtengröße ist und/oder alle Nachrichtensegmente von der verkürzten Filterliste entfernt sind. Erst dann erfolgen das Erzeugen der zweiten Nachricht aus der Übertragungsliste und das Senden der zweiten Nachricht über das Kommunikationsnetzwerk. Wird das Fortschreiben der Übertragungsliste unterbrochen, etwa weil die Größe der hinzugefügten Nachrichtensegmente die maximale Nachrichtengröße erreicht hat, so kann die Nachricht mit den bis zu diesem Zeitpunkt hinzugefügten Nachrichtensegmenten generiert werden. Somit kann sichergestellt werden, dass die Nachricht auch bei begrenzter Nachrichtengröße jeweils die Nachrichtensegmente mit der höchsten Priorität enthält.

Gemäß einer Ausführungsform kann das Verfahren zusätzlich den folgenden Schritt umfassen: Prüfen, ob die Übertragungsliste mindestens ein Nachrichtensegment enthält. Wenn ja, können das Erzeugen der zweiten Nachricht mit der Übertragungsliste und das Senden der zweiten Nachricht über das Kommunikationsnetzwerk erfolgen. Somit kann beispielsweise das Versenden von Nachrichten ohne Nachrichtensegmente vermieden werden.

Gemäß einer Ausführungsform kann der Prioritätsschwellenwert aus einer Kanalbelegungsrate (Channel Busy Ratio, CBR) berechnet werden. Dabei kann der Prioritätsschwellenwert mit der Kanalbelegungsrate zunehmen und/oder abnehmen. Unter einer Kanalbelegungsrate kann im Allgemeinen ein Verhältnis eines Zeitintervalls, in dem ein dem Kommunikationsnetzwerk zugeordneter Funkkanal benutzt wird, zu einem Messintervall, in dem die Kanalbelegungsrate gemessen wird, verstanden werden. Beispielsweise kann der Prioritätsschwellenwert proportional zur Kanalbelegungsrate sein. Zusätzlich oder alternativ kann aus den Prioritätswerten zuletzt übertragener Nachrichtensegmente mindestens eine statistische Kenngröße berechnet werden. Der Prioritätsschwellenwert kann dann aus der statistischen Kenngröße berechnet werden. Eine solche statistische Kenngröße kann etwa ein arithmetischer Mittelwert oder ein Median sein. Es ist möglich, dass der Prioritätsschwellenwert mit der statistischen Kenngröße zunimmt und/oder abnimmt. Beispielsweise kann der Prioritätsschwellenwert proportional zur statistischen Kenngröße sein. Dadurch können zufallsbedingte Schwankungen beim Berechnen des Prioritätsschwellenwertes kompensiert werden.

Gemäß einer Ausführungsform kann die aktuelle Auslastung des Kommunikationsnetzwerkes als eine aktuell verfügbare Datenübertragungsrate ($R_a$) eines dem Kommunikationsnetzwerk zugeordneten Funkkanals aus einer Kanalbelegungsrate (CBR) und einer Datenübertragungsrate (R) des Funkkanals berechnet werden zu: $R_a = (1 - CBR) \cdot R$. Unter einer Datenübertragungsrate kann eine theoretische Bandbreite oder eine für eine Übertragung nötige Bandbreite des Funkkanals verstanden werden. Die nötige Bandbreite kann beispielsweise rund zwei Drittel der theoretischen Bandbreite betragen. Somit kann die Auslastung des Kommunikationsnetzwerkes sehr einfach ermittelt werden.

Gemäß einer Ausführungsform kann die maximale Nachrichtengröße berechnet werden zu: $M_{max} = R_\alpha \cdot T$. Dabei ist unter T eine Zeit seit einer letzten Übertragung einer Nachricht über den Funkkanal zu verstehen. Damit kann die maximale Nachrichtengröße abhängig von einer Übertragungshäufigkeit bestimmt werden. Beispielsweise kann die Nachrichtengröße umso größer gewählt werden, je geringer die Übertragungshäufigkeit ist, und umgekehrt.

Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

Fig. 1 zeigt schematisch ein Verkehrsszenario mit miteinander vernetzten Fahrzeugen, die je mit einer Auswerteeinheit gemäß einem Ausführungsbeispiel der Erfindung ausgestattet sind.

Fig. 2 zeigt schematisch, wie Nachrichtensegmente durch die Auswerteeinheit aus Fig. 1 gefiltert werden.

Fig. 3 zeigt ein Ablaufdiagramm eines Verfahrens gemäß einem Ausführungsbeispiel der Erfindung.

Die Figuren sind lediglich schematisch und nicht maßstabsgetreu. Gleiche Bezugszeichen bezeichnen in den Figuren gleiche oder gleichwirkende Merkmale.

Ausführungsformen der Erfindung

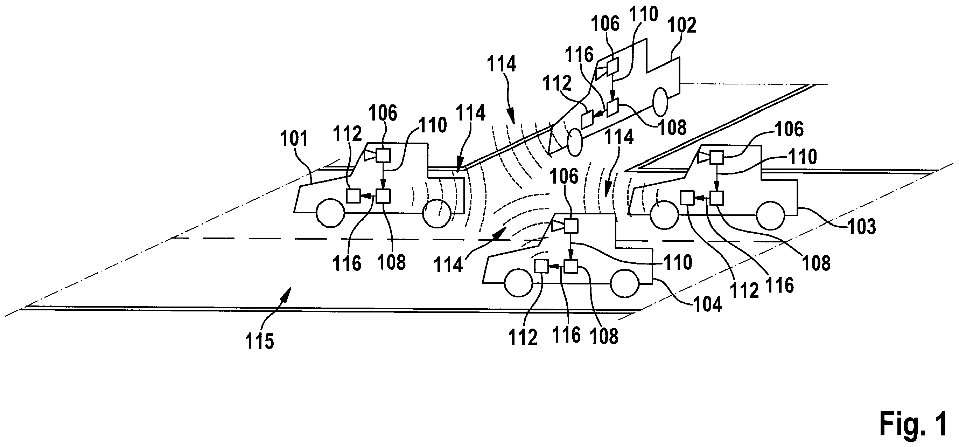

Fig. 1 zeigt beispielhaft vier Fahrzeuge 101, 102, 103, 104, die je mit einer Sensorik 106 zum Erfassen einer Umgebung, einer Auswerteeinheit 108 zum Auswerten von Sensordaten 110, die durch die Sensorik 106 erzeugt werden, und einer Aktorik 112 ausgestattet sind. Die Auswerteeinheit 108 ist ferner konfiguriert, um basierend auf den Sensordaten 110 eine Nachricht 114 über ein drahtloses V2X-Kommunikkationsnetzwerk, in dem die vier Fahrzeuge 101, 102, 103, 104 miteinander vernetzt sind, zu senden und/oder zu empfangen. Eine empfangene Nachricht 114 kann von der Auswerteeinheit 108 beispielsweise zur Ansteuerung der Aktorik 112 ausgewertet werden. Somit ist es beispielsweise möglich, einzelne Fahrmanöver der Fahrzeuge 101, 102, 103, 104 automatisiert aufeinander abzustimmen, was auch als kooperatives Fahren bezeichnet werden kann.

In Fig. 1 fahren die drei Fahrzeuge 101, 103, 104 auf einer Autobahn 115, während das Fahrzeug 102 im Begriff ist, auf die Autobahn 115 aufzufahren.

Beispielhaft ist die Sensorik 106 als Kamera realisiert. Die Sensorik 106 kann jedoch auch mehrere, verschiedenartige Sensoreinheiten umfassen. So kann die Sensorik 106 zusätzlich oder alternativ zur Kamera beispielsweise mindestens einen Radar-, Lidar- oder Ultraschallsensor oder Laserscanner aufweisen.

Die Aktorik 112 kann beispielsweise einen Lenk- oder Bremsaktor oder einen Aktor zur Motorsteuerung umfassen. Die Auswerteeinheit 108 kann ausgeführt sein, um basierend auf den Sensordaten 110 und/oder der Nachricht 114 ein Steuersignal 116 zur Ansteuerung der Aktorik 112 zu erzeugen, um das betreffende Fahrzeug automatisiert zu steuern, d. h. zu lenken, zu bremsen, zu beschleunigen oder entsprechend einer vorgegebenen Route in einer digitalen Karte zu navigieren, insbesondere beispielsweise unter Berücksichtigung voraussichtlicher Trajektorien der jeweils anderen Fahrzeuge.

Die Auswerteeinheit 108 ist insbesondere konfiguriert, um aus den Sensordaten 110 Objekte in der Umgebung zu extrahieren, beispielsweise benachbarte Fahrzeuge oder deren mögliche Trajektorien. So erkennt die Auswerteeinheit 108 des Fahrzeugs 103 beispielsweise die drei Fahrzeuge 101, 102, 104. Bei der Erkennung ordnet die Auswerteeinheit 108 jedem der erkannten Objekte einen Prioritätswert zu, der eine Relevanz des erkannten Objekts für das Fahrzeug 103 quantifiziert. Beispielsweise erhalten in diesem Beispiel die zwei Fahrzeuge 101, 104 einen niedrigeren Prioritätswert als das auffahrende Fahrzeug 102, dessen Trajektorie sich mit einer Trajektorie des Fahrzeugs 103 voraussichtlich kreuzt.

Zusätzlich ermittelt die Auswerteeinheit 108 eine aktuelle Kanalauslastung eines Funkkanals, über den die Fahrzeuge 101, 102, 103, 104 miteinander kommunizieren. Basierend auf der aktuellen Kanalauslastung und den jeweiligen Prioritätswerten wählt die Auswerteeinheit 108 nun diejenigen aus den erkannten Objekten aus, die besonders relevant sind, hier beispielsweise das erkannte Fahrzeug 102, und generiert und versendet eine Nachricht 114 mit einer diesbezüglichen Information, beispielsweise über Position, Geschwindigkeit, Trajektorie des erkannten Fahrzeugs 102. Weniger relevante Objekte werden dabei aus der Nachricht 114 ausgeschlossen, um den Funkkanal nicht unnötig zu belasten. Die Nachricht 114 kann von anderen Fahrzeugen empfangen werden, etwa von den Fahrzeugen 101, 104.

Die einzelnen Schritte einer solchen prioritätsbasierten Nachrichtengenerierung unter Berücksichtigung einer Kanalauslastung werden nachfolgend am Beispiel der Auswerteeinheit 108 des Fahrzeugs 103 näher beschrieben. Die Beschreibung kann jedoch in gleicher oder ähnlicher Weise auch auf die Auswerteeinheiten 108 der anderen Fahrzeuge 101, 102, 104 zutreffen.

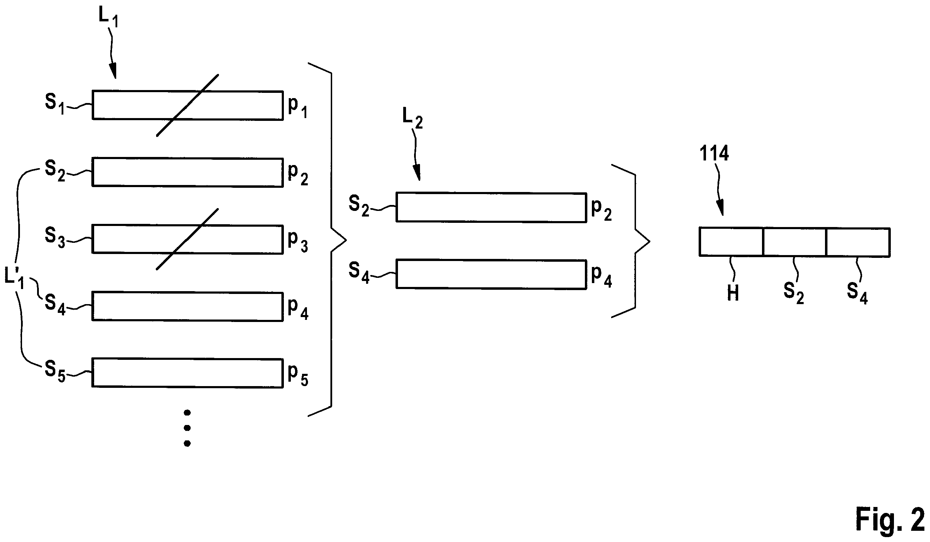

Fig. 2 zeigt eine durch die Auswerteeinheit 108 auf Basis der Sensordaten 110 generierte Filterliste $L_1$ mit verschiedenen Nachrichtensegmenten $S_1$, $S_2$, $S_3$, $S_4$, $S_5$, die jeweils ein in der Umgebung des Fahrzeugs 103 erkanntes Objekt, darunter etwa die Fahrzeuge 101, 102, 104, beschreiben. Jedes der Nachrichtensegmente $S_1$, $S_2$, $S_3$, $S_4$, $S_5$ ist mit einem Prioritätswert $p_i$ gekennzeichnet, der eine jeweilige Priorität des in dem Nachrichtensegment beschriebenen Objekts anzeigt.

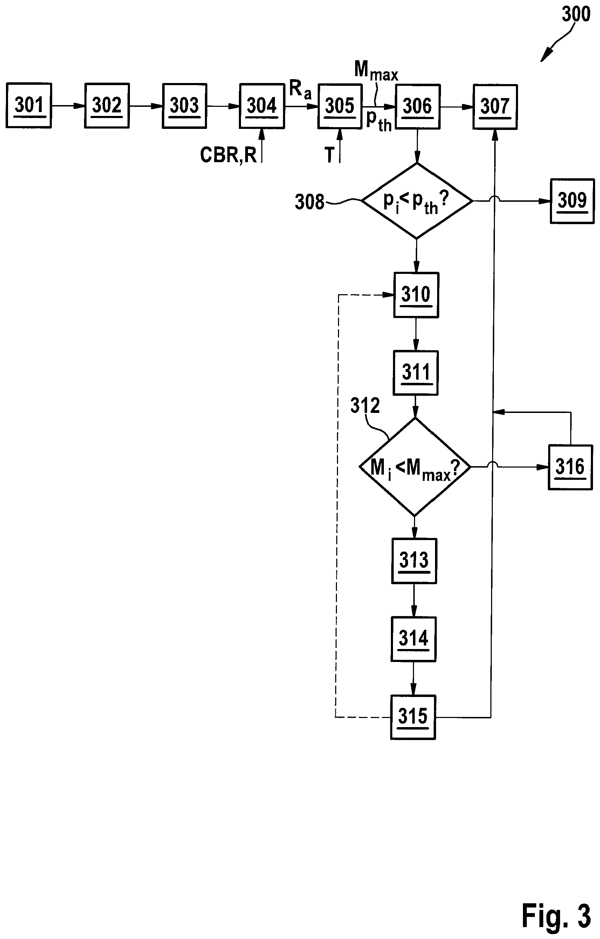

Anhand eines Schwellenwertvergleichs entfernt die Auswerteeinheit 108 in einem ersten Schritt die Nachrichtensegmente $S_1$, $S_3$ mit niedrigen Prioritätswerten $p_1$ bzw. $p_3$ aus der Filterliste $L_1$, die dadurch zu einer verkürzten Filterliste $L'_1$ wird. Aus den in der verkürzten Filterliste $L'_1$ enthaltenen Nachrichtensegmenten $S_2$, $S_4$, $S_5$ erstellt die Auswerteeinheit 108 in einem zweiten Schritt eine Übertragungsliste $L_2$, die hier die Nachrichtensegmente $S_2$, $S_4$ mit besonders hohen Prioritätswerten $p_2$ bzw. $p_4$ enthält. Die Übertragungsliste $L_2$ wird so erstellt, dass sie eine vorgegebene maximale Nachrichtengröße nicht überschreitet. In diesem Beispiel ist die Nachrichtengröße beispielsweise nicht ausreichend, um zusätzlich zu den beiden Nachrichtensegmenten $S_2$, $S_4$ das Nachrichtensegment $S_5$ in die Übertragungsliste $L_2$ aufzunehmen. Die maximale Nachrichtengröße bestimmt die Auswerteeinheit 108 beispielsweise aus der aktuellen Kanalauslastung, wie nachfolgend anhand von Fig. 3 näher beschrieben.

Aus der Übertragungsliste $L_2$ generiert die Auswerteeinheit 108 schließlich die Nachricht 114. Die Nachricht 114 enthält neben den zu übertragenden Nachrichtensegmenten $S_2$, $S_4$ aus der Übertragungsliste $L_2$ einen Header H mit obligatorischen Daten, unter anderem etwa zum Fahrzeug 103 und zu dessen Sensorik 106.

Fig. 3 zeigt ein Ablaufdiagramm eines Verfahrens 300 zum Übertragen der Nachricht 114. Das Verfahren 300 kann beispielsweise von der Auswerteeinheit 108 gemäß Fig. 2 durchgeführt werden.

In einem ersten Schritt 301 wird eine von einem anderen Verkehrsteilnehmer 101, 102, 104 gesendete Nachricht in der Auswerteeinheit 108 empfangen, wobei die Nachricht zu filternde Nachrichtensegmente $S_1$ ... $S_5$ mit zugehörigen Prioritätswerten $p_1$ ... $p_5$ enthält.

In einem weiteren Schritt 303 wird die Filterliste $L_1$ mit den zu filternden Nachrichtensegmenten $S_1$ ... $S_5$ mit den zugehörigen Prioritätswerten $p_1$ ... $p_5$ erstellt.

Alternativ werden im ersten Schritt 301 optional die Sensordaten 110 in der Auswerteeinheit 108 empfangen. In einem weiteren optionalen Schritt 302 werden die Objekte 101, 102, 104 in der Umgebung des Fahrzeugs 103 durch entsprechende Verarbeitung und Auswertung der Sensordaten 110 erkannt. Dabei werden den Objekten 101, 102, 104 je nach Relevanz unterschiedliche Prioritätswerte $p_i$ zugeordnet. Im Schritt 303 wird dann die Filterliste $L_1$ mit den die Objekte 101, 102, 104 beschreibenden zu filternden Nachrichtensegmenten $S_1$ ... $S_5$ mit den zugehörigen Prioritätswerten $p_1$ ... $p_5$ erstellt.

In einem weiteren Schritt 304 wird eine aktuell verfügbare Datenübertragungsrate $R_a$ eines dem Kommunikationsnetzwerk zugeordneten Funkkanals bestimmt.

In einem weiteren Schritt 305 werden aus der aktuell verfügbaren Datenübertragungsrate $R_a$ eine maximale Nachrichtengröße $M_{max}$ einer zu übertragenden Nachricht und ein Prioritätsschwellenwert $p_{th}$ berechnet.

In einem weiteren Schritt 306 wird die Filterliste $L_1$ mit der maximalen Nachrichtengröße $M_{max}$ und dem Prioritätsschwellenwert $p_{th}$ als Filterkriterien gefiltert. Die Nachrichtensegmente $S_1$, $S_3$ mit den unterhalb des Prioritätsschwellenwerts $p_{th}$ liegenden Prioritätswerten $p_1$ bzw. $p_3$ werden dabei von der Filterliste $L_1$ entfernt. Aus den Nachrichtensegmenten $S_2$, $S_4$, $S_5$ mit den oberhalb des Prioritätsschwellenwerts $p_{th}$ liegenden Prioritätswerten $p_2$, $p_4$ bzw. $p_5$ werden Nachrichtensegmente für die Übertragungsliste $L_2$ ausgewählt, bis die maximale Nachrichtengröße $M_{max}$ erreicht ist. Dies ist hier der Fall, nachdem die Nachrichtensegmente $S_2$, $S_4$ in die Übertragungsliste $L_2$ übernommen wurden.

Schließlich wird in einem Schritt 307 aus der Übertragungsliste $L_2$ die Nachricht 114 erzeugt und über den Funkkanal im Kommunikationsnetzwerk übertragen.

Das vorangehend beschriebene Verfahren 300 kann als Erweiterung eines weiter oben erwähnten ETSI-DCC-Protokolls betrachtet werden. Dabei kann die Filterliste $L_1$ beispielsweise von einer Anwendungsschicht bereitgestellt und von einer darunterliegenden Schicht, etwa einem DCC-Protokoll, empfangen werden. Beim Empfangen der Filterliste $L_1$ können beispielsweise die folgenden sechs prinzipiellen Schritte durch das DCC-Protokoll ausgeführt werden. Es ist aber auch möglich, dass nur die ersten beiden der sechs Schritte durch das DCC-Protokoll ausgeführt werden, während die übrigen Schritte durch die Anwendungsschicht ausgeführt werden. Auf diese Weise kann vermieden werden, dass Listen von Nachrichtensegmenten zwischen der Anwendungsschicht und dem DCC-Protokoll ausgetauscht werden.

1. Zunächst wird im Schritt 304 ein für eine Übertragung aktuell verfügbarer Datenübertragungsrate $R_a$ geschätzt. Dazu kann beispielsweise eine aktuelle Kanalbelegungsrate CBR (CBR = Channel Busy Ratio) gemessen werden. Die Kanalbelegungsrate CBR beschreibt einen Zeitanteil, in dem der Funkkanal von anderen Stationen genutzt wird ($0 \leq$ CBR $\leq 1$). Basierend auf der gemessenen Kanalbelegungsrate CBR und einer verfügbaren Datenrate R des Funkkanals, die zweckmäßigerweise aus einer Gesamtdatenrate geschätzt werden kann und beispielsweise zwei Drittel der Gesamtdatenrate betragen kann, wird der verfügbare Durchsatz $R_a$ berechnet zu:

$$R_a = (1 - \text{CBR}) \cdot R \text{ [Mbit/s]}$$

2. Anschließend wird im Schritt 305 basierend auf dem verfügbaren Durchsatz $R_a$ und einer Zeit T, die seit einer letzten Nachrichtenübertragung vergangen ist, die maximale Nachrichtengröße $M_{max}$ berechnet zu:

$$M_{\max} = R_a \cdot T \text{ [bit]}$$

3. Des Weiteren wird im Schritt 305 der Prioritätsschwellenwert $p_{th}$ als Funktion der Kanalbelegungsrate CBR berechnet, wobei eine höhere Kanalbelegungsrate CBR in einem höheren Prioritätsschwellenwert $p_{th}$ resultiert und umgekehrt. Alternativ oder zusätzlich kann der Prioritätsschwellenwert $p_{th}$ basierend auf einer statistischen Verteilung von Prioritätswerten $p_i$ aller zuletzt für eine Übertragung ausgewählten Nachrichtensegmente $S_i$, etwa basierend auf einem arithmetischen Mittelwert oder einem Median, berechnet werden. Dabei ist der Prioritätsschwellenwert $p_{th}$ umso größer, je größer die Prioritätswerte $p_i$ der zuletzt ausgewählten Nachrichtensegmente $S_i$ sind, und umgekehrt.

4. Nun werden in einem Schritt 308 alle Nachrichtensegmente $S_1$, $S_3$ aus der Filterliste $L_1$ verworfen, deren Prioritätswert $p_1$ bzw. $p_3$ unter dem Prioritätsschwellenwert $p_{th}$ liegt. Die Filterliste $L_1$ wird dadurch entsprechend verkürzt. Enthält die Filterliste $L_1$ von vornherein ausschließlich Nachrichtensegmente $S_i$ mit Prioritätswerten $p_i$ unter dem Prioritätsschwellenwert $p_{th}$, so wird beispielsweise die gesamte Fil-

terliste $L_1$ verworfen und das Verfahren in einem Schritt 309 abgebrochen.

5. In einem Schritt 310 wird die Übertragungsliste $L_2$ als neue leere Liste erstellt. Nun werden aus den Nachrichtensegmenten $S_2$, $S_4$, $S_5$ der verkürzten Filterliste $L'_1$ Nachrichtensegmente für die Übertragungsliste $L_2$ ausgewählt.

6. Dazu wird die Filterliste $L_1$ schrittweise abgearbeitet. Zunächst wird im Schritt 310 das Nachrichtensegment $S_2$ mit dem höchsten Prioritätswert $p_2$ ausgewählt. In einem Schritt 311 wird eine Nachrichtensegmentgröße M des ausgewählten Nachrichtensegments $S_2$ ermittelt. In einem Schritt 312 wird die Nachrichtensegmentgröße M mit der maximalen Nachrichtengröße $M_{max}$ verglichen. Wenn $M < M_{max}$, wird das ausgewählte Nachrichtensegment $S_2$ in einem Schritt 313 zur Übertragungsliste $L_2$ hinzugefügt und in einem Schritt 314 von der Filterliste $L'_1$ entfernt. Abschließend wird in einem Schritt 315 die maximale Nachrichtengröße $M_{max}$ für eine nachfolgende Iteration reduziert:

$$M_{\mathrm{max,\,neu}} = M_{\mathrm{max}} - M.$$

In der nächsten Iteration werden die Schritte 310 bis 315 für die in der Filterliste $L'_1$ verbleibenden Nachrichtensegmente $S_4$, $S_5$ wiederholt. Das Nachrichtensegment mit dem höchsten Prioritätswert ist nun das Nachrichtensegment $S_4$.

Die Schritte 310 bis 315 werden im Allgemeinen so lange zyklisch wiederholt, bis die Filterliste $L'_1$ leer ist. Mit der fertiggestellten Übertragungsliste $L_2$ wird abschließend im Schritt 307 die Nachricht 114 generiert und versendet.

Ergibt sich hingegen im Schritt 312, dass ein in die Übertragungsliste $L_2$ zu übernehmendes Nachrichtensegment $S_i$ größer oder gleich der maximalen Nachrichtengröße $M_{max}$ ist, wie hier beispielsweise das Nachrichtensegment $S_5$, so kann beispielweise in einem zusätzlichen Schritt 316 vor dem Generieren der Nachricht 114 geprüft werden, ob die Übertragungsliste $L_2$ mindestens ein Nachrichtensegment $S_i$ oder mehr als eine vorgegebene Mindestanzahl von Nachrichtensegmenten $S_i$ enthält. Ist dies der Fall, so wird im Schritt 307 die Nachricht 114 generiert und versendet. Ist dies nicht der Fall, so wird keine Nachricht 114 generiert und das Verfahren 300 abgebrochen.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

**Patentansprüche**

1.  Verfahren (300) zum Übertragen einer Nachricht (114) in einem Kommunikationsnetzwerk zur Kommunikation zwischen einem Verkehrsteilnehmer (103) und mindestens einem weiteren Verkehrsteilnehmer (101, 102, 104), wobei der Verkehrsteilnehmer (103) und der weitere Verkehrsteilnehmer (101, 102, 104) je eine Auswerteeinheit (108) zum Übertragen von Nachrichten (114) über das Kommunikationsnetzwerk aufweisen, wobei das Verfahren (300) umfasst:

    Empfangen (301) einer ersten Nachricht in der Auswerteeinheit (108), wobei die erste Nachricht Nachrichtensegmente ($S_1$, $S_2$, $S_3$, $S_4$, $S_5$) mit je einem Prioritätswert ($p_1$, $p_2$, $p_3$, $p_4$, $p_5$) umfasst;
    Bestimmen (304) einer aktuellen Auslastung des Kommunikationsnetzwerkes;
    Ausfiltern (306) von zu übertragenden Nachrichtensegmenten ($S_4$, $S_5$) aus der ersten Nachricht basierend auf den Prioritätswerten ($p_1$, $p_2$, $p_3$, $p_4$, $p_5$) und der aktuellen Auslastung des Kommunikationsnetzwerkes; und
    Erzeugen (307) einer zweiten Nachricht (114) mit den zu übertragenden Nachrichtensegmenten ($S_4$, $S_5$) und Senden (307) der zweiten Nachricht (114) über das Kommunikationsnetzwerk; **gekennzeichnet dadurch, dass** das Verfahren (300) weiter umfasst:

    Bestimmen (305) einer maximalen Nachrichtengröße ($M_{max}$) einer zu übertragenden Nachricht (114) abhängig von der aktuellen Auslastung des Kommunikationsnetzwerkes und Bestimmen (305) eines Prioritätsschwellenwertes ($p_{th}$) abhängig von der aktuellen Auslastung des Kommunikationsnetzwerkes;
    Ausfiltern der zu übertragenden Nachrichtensegmente ($S_4$, $S_5$) aus der ersten Nachricht basierend auf der maximalen Nachrichtengröße ($M_{max}$) und dem Prioritätsschwellenwert ($p_{th}$);
    wobei eine Filterliste ($L_1$) zu filternder Nachrichtensegmente ($S_1$, $S_2$, $S_3$, $S_4$, $S_5$) erstellt wird;
    wobei die Prioritätswerte ($p_1$, $p_2$, $p_3$, $p_4$, $p_5$) jeweils mit dem Prioritätsschwellenwert ($p_{th}$) verglichen werden;
    wobei die Filterliste ($L_1$) durch Entfernen von Nachrichtensegmenten ($S_1$, $S_3$), deren Prioritätswert ($p_1$, $p_3$) unter dem Prioritätsschwellenwert ($p_{th}$) liegt, verkürzt wird;
    wobei die zu übertragenden Nachrichtensegmente ($S_4$, $S_5$) aus der verkürzten Filterliste ($L'_1$) unter Berücksichtigung der ma-

ximalen Nachrichtengrö-ße ($M_{max}$) ausgewählt werden.

2. Verfahren (300) nach Anspruch 1, weiter umfassend:

Auswählen (310) eines Nachrichtensegments ($S_2$, $S_4$, $S_5$) mit dem höchsten Prioritätswert ($p_2$, $p_4$, $p_5$) aus der verkürzten Filterliste ($L'_1$);
Ermitteln (311) einer Nachrichtensegmentgröße ($M$) des ausgewählten Nachrichtensegments ($S_2$, $S_4$, $S_5$);
Vergleichen (312) der Nachrichtensegmentgröße ($M$) mit der maximalen Nachrichtengröße ($M_{max}$);
wenn die Nachrichtensegmentgröße ($M$) kleiner als die maximale Nachrichtengröße ($M_{max}$) ist:
Hinzufügen (313) des ausgewählten Nachrichtensegments ($S_2$, $S_4$, $S_5$) zu einer Übertragungsliste ($L_2$) zu übertragender Nachrichtensegmente;
Entfernen (314) des ausgewählten Nachrichtensegments ($S_2$, $S_4$, $S_5$) von der verkürzten Filterliste ($L'_1$);
Reduzieren (315) der maximalen Nachrichtengröße ($M_{max}$) um die Nachrichtensegmentgröße ($M$);
wobei die Schritte des Auswählens (310), Ermittelns (311), Vergleichens (312), Hinzufügens (313), Entfernens (314) und Reduzierens (315) zyklisch wiederholt werden, bis die Nachrichtensegmentgröße ($M$) kleiner oder gleich der maximalen Nachrichtengröße ($M_{max}$) ist und/oder alle Nachrichtensegmente ($S_1$, $S_2$, $S_3$, $S_4$, $S_5$) von der verkürzten Filterliste ($L'_1$) entfernt sind;
dann: Erzeugen (307) der zweiten Nachricht (114) aus der Übertragungsliste ($L_2$) und Senden (307) der zweiten Nachricht (114) über das Kommunikationsnetzwerk.

3. Verfahren (300) nach Anspruch 2, weiter umfassend:

Prüfen (316), ob die Übertragungsliste ($L_2$) mindestens ein Nachrichtensegment ($S_1$, $S_2$, $S_3$, $S_4$, $S_5$) enthält;
wenn ja: Erzeugen (307) der zweiten Nachricht (114) mit der Übertragungsliste ($L_2$) und Senden (307) der zweiten Nachricht (114) über das Kommunikationsnetzwerk.

4. Verfahren (300) nach einem der vorhergehenden Ansprüche,

wobei der Prioritätsschwellenwert ($p_{th}$) aus einer Kanalbelegungsrate (CBR) berechnet wird,
wobei der Prioritätsschwellenwert ($p_{th}$) mit der Kanalbelegungsrate (CBR) zunimmt und/oder abnimmt; und/oder
wobei aus den Prioritätswerten zuletzt übertragener Nachrichtensegmente mindestens eine statistische Kenngröße berechnet wird, wobei der Prioritätsschwellenwert ($p_{th}$) aus der statistischen Kenngröße berechnet wird.

5. Verfahren (300) nach einem der vorhergehenden Ansprüche,
wobei die aktuelle Auslastung des Kommunikationsnetzwerkes als eine aktuell verfügbare Datenübertragungsrate ($R_a$) eines dem Kommunikationsnetzwerk zugeordneten Funkkanals aus einer Kanalbelegungsrate (CBR) und einer Datenübertragungsrate ($R$) des Funkkanals berechnet wird zu:

$$R_a = (1 - \text{CBR}) \cdot R.$$

6. Verfahren (300) nach Anspruch 5,
wobei die maximale Nachrichtengröße ($M_{max}$) berechnet wird zu:

$$M_{max} = R_a \cdot T,$$

wobei T eine Zeit seit einer letzten Übertragung einer Nachricht (114) über den Funkkanal anzeigt.

7. Auswerteeinheit (108), die ausgeführt ist, um das Verfahren (300) nach einem der vorhergehenden Ansprüche durchzuführen.

8. Computerprogramm, das, wenn es auf einem Prozessor ausgeführt wird, das Verfahren (300) nach einem der Ansprüche 1 bis 6 durchführt.

9. Computerlesbares Medium, auf dem ein Computerprogramm nach Anspruch 8 gespeichert ist.

**Claims**

1. Method (300) for transmitting a message (114) in a communication network for communicating between a road user (103) and at least one further road user (101, 102, 104), wherein the road user (103) and the further road user (101, 102, 104) each have an evaluation unit (108) for transmitting messages (114) via the communication network, wherein the method (300) comprises:

receiving (301) a first message in the evaluation unit (108), wherein the first message comprises message segments ($S_1$, $S_2$, $S_3$, $S_4$, $S_5$) each with a priority value ($p_1$, $p_2$, $p_3$, $p_4$, $p_5$);
determining (304) a current utilization of the communication network;

filtering (306) message segments ($S_4$, $S_5$) to be transmitted from the first message on the basis of the priority values ($p_2$, $p_2$, $p_3$, $p_4$, $p_5$) and the current utilization of the communication network; and

generating (307) a second message (114) having the message segments ($S_4$, $S_5$) to be transmitted, and sending (307) the second message (114) via the communication network;

**characterized in that** the method (300) also comprises:

> determining (305) a maximum message size ($M_{max}$) of a message (114) to be transmitted on the basis of the current utilization of the communication network, and determining (305) a priority threshold value ($p_{th}$) on the basis of the current utilization of the communication network;
>
> filtering the message segments ($S_4$, $S_5$) to be transmitted from the first message on the basis of the maximum message size ($M_{max}$) and the priority threshold value ($p_{th}$);
>
> wherein a filter list ($L_1$) of message segments ($S_1$, $S_2$, $S_3$, $S_4$, $S_5$) to be filtered is created;
>
> wherein the priority values ($p_1$, $p_2$, $p_3$, $p_4$, $p_5$) are each compared with the priority threshold value (Pth) ;
>
> wherein the filter list ($L_2$) is shortened by removing message segments ($S_1$, $S_3$), the priority value ($p_1$, $p_3$) of which is below the priority threshold value (Pth) ;
>
> wherein the message segments ($S_4$, $S_5$) to be transmitted are selected from the shortened filter list ($L'_1$) taking into account the maximum message size ($M_{max}$) .

**2.** Method (300) according to Claim 1, also comprising:

> selecting (310) a message segment ($S_2$, $S_4$, $S_5$) with the highest priority value ($p_2$, $p_4$, $p_5$) from the shortened filter list ($L'_1$);
>
> determining (311) a message segment size (M) of the selected message segment ($S_2$, $S_4$, $S_5$) ;
>
> comparing (312) the message segment size (M) with the maximum message size ($M_{max}$);
>
> if the message segment size (M) is less than the maximum message size ($M_{max}$): adding (313) the selected message segment ($S_2$, $S_4$, $S_5$) to a transmission list ($L_2$) of message segments to be transmitted;
>
> removing (314) the selected message segment ($S_2$, $S_4$, $S_5$) from the shortened filter list ($L'_1$);
>
> reducing (315) the maximum message size ($M_{max}$) by the message segment size (M);
>
> wherein the steps of selecting (310), determining (311), comparing (312), adding (313), removing (314) and reducing (315) are cyclically repeated until the message segment size (M) is less than or equal to the maximum message size ($M_{max}$) and/or all message segments ($S_1$, $S_2$, $S_3$, $S_4$, $S_5$) have been removed from the shortened filter list ($L'_1$);

then: generating (307) the second message (114) from the transmission list ($L_2$), and sending (307) the second message (114) via the communication network.

**3.** Method (300) according to Claim 2, also comprising:

> checking (316) whether the transmission list ($L_2$) contains at least one message segment ($S_1$, $S_2$, $S_3$, $S_4$, $S_5$) ;
>
> if so: generating (307) the second message (114) with the transmission list ($L_2$), and sending (307) the second message (114) via the communication network.

**4.** Method (300) according to one of the preceding claims,

> wherein the priority threshold value ($p_{th}$) is calculated from a channel occupancy rate (CBR), wherein the priority threshold value ($p_{th}$) increases and/or decreases with the channel occupancy rate (CBR); and/or
>
> wherein at least one statistical characteristic variable is calculated from the priority values of message segments transmitted last, wherein the priority threshold value ($p_{th}$) is calculated from the statistical characteristic variable.

**5.** Method (300) according to one of the preceding claims, wherein the current utilization of the communication network is calculated, as a currently available data transmission rate ($R_a$) of a radio channel assigned to the communication network, from a channel occupancy rate (CBR) and a data transmission rate (R) of the radio channel as:

$$R_a = (1 - CBR) \cdot R.$$

**6.** Method (300) according to Claim 5,

> wherein the maximum message size ($M_{max}$) is calculated as:

$$M_{max} = R_a \cdot T,$$

> where T indicates a time since a last transmission of a message (114) via the radio channel.

7. Evaluation unit (108) which is configured to carry out the method (300) according to one of the preceding claims.

8. Computer program which, when executed on a processor, carries out the method (300) according to one of Claims 1 to 6.

9. Computer-readable medium on which a computer program according to Claim 8 is stored.

**Revendications**

1. Procédé (300) de transmission d'un message (114) dans un réseau de communication destiné à la communication entre un acteur du trafic (103) et au moins un acteur du trafic supplémentaire (101, 102, 104), l'acteur du trafic (103) et l'acteur du trafic supplémentaire (101, 102, 104) possédant respectivement une unité d'interprétation (108) destinée à transmettre des messages (114) par le biais du réseau de communication, le procédé (300) comprenant :

   réception (301) d'un premier message dans l'unité d'interprétation (108), le premier message comportant des segments de message ($S_1$, $S_2$, $S_3$, $S_4$, $S_5$) ayant chacun une valeur de priorité ($p_1$, $p_2$, $p_3$, $p_4$, $p_5$) ;
   détermination (304) d'un taux de charge actuel du réseau de communication ;
   élimination par filtrage (306) de segments de message ($S_4$, $S_5$) à transmettre du premier message en se basant sur les valeurs de priorité ($p_2$, $p_2$, $p_3$, $p_4$, $p_5$) et sur le taux de charge actuel du réseau de communication ; et
   génération (307) d'un deuxième message (114) avec les segments de message ($S_4$, $S_5$) à transmettre et émission (307) du deuxième message (114) par le biais du réseau de communication ;
   **caractérisé en ce que** le procédé (300) comprend en outre :

   détermination (305) d'une taille de message maximale ($M_{max}$) d'un message (114) à transmettre en fonction du taux de charge actuel du réseau de communication et détermination (305) d'une valeur de seuil de priorité ($p_{th}$) en fonction du taux de charge actuel du réseau de communication ;
   élimination par filtrage des segments de message ($S_4$, $S_5$) à transmettre du premier message en se basant sur la taille de message maximale ($M_{max}$) et la valeur de seuil de priorité ($p_{th}$) ;
   une liste de filtrage ($L_2$) de segments de message ($S_1$, $S_2$, $S_3$, $S_4$, $S_5$) étant créée ;
   les valeurs de priorité ($p_1$, $p_2$, $p_3$, $p_4$, $p_5$)

   étant respectivement comparées à la valeur de seuil de priorité (Pth) ;
   la liste de filtrage ($L_1$) étant raccourcie en éliminant les segments de message ($S_1$, $S_3$) dont la valeur de priorité ($p_1$, $p_3$) est inférieure à la valeur de seuil de priorité ($p_{th}$) ;
   les segments de message ($S_4$, $S_5$) à transmettre étant sélectionnés dans la liste de filtrage raccourcie ($L'_1$) en tenant compte de la taille de message maximale ($M_{max}$).

2. Procédé (300) selon la revendication 1, comprenant en outre :

   sélection (310) d'un segment de message ($S_2$, $S_4$, $S_5$) ayant la valeur de priorité ($p_2$, $p_4$, $p_5$) la plus élevée dans la liste de filtrage raccourcie ($L'_1$) ;
   identification (311) d'une taille de segment de message (M) du segment de message ($S_2$, $S_4$, $S_5$) sélectionné ;
   comparaison (312) de la taille de segment de message (M) à la taille de message maximale ($M_{max}$) ;
   lorsque la taille de segment de message (M) est inférieure à la taille de message maximale ($M_{max}$) : ajout (313) du segment de message ($S_2$, $S_4$, $S_5$) sélectionné à une liste de transmission ($L_2$) des segments de message à transmettre ;
   suppression (314) du segment de message ($S_2$, $S_4$, $S_5$) sélectionné de la liste de filtrage raccourcie ($L'_1$) ;
   réduction (315) de la taille de message maximale ($M_{max}$) de la taille de segment de message (M) ;
   les étapes de sélection (310), d'identification (311),
   de comparaison (312), d'ajout (313), de suppression (314) et de réduction (315) étant répétées de manière cyclique jusqu'à ce que la taille de segment de message (M) soit inférieure ou égale à la taille de message maximale ($M_{max}$) et/ou tous les segments de message ($S_1$, $S_2$, $S_3$, $S_4$, $S_5$) soient supprimés de la liste de filtrage raccourcie ($L'_1$) ;
   ensuite : génération (307) du deuxième message (114) à partir de la liste de transmission ($L_2$) et émission (307) du deuxième message (114) par le biais du réseau de communication.

3. Procédé (300) selon la revendication 2, comprenant en outre :

   vérification (316) du fait que la liste de transmission ($L_2$) contient au moins un segment de message ($S_1$, $S_2$, $S_3$, $S_4$, $S_5$) ;
   dans l'affirmative : génération (307) du deuxième message (114) avec la liste de transmission (L₂) et émission (307) du deuxième message (114) par le biais du réseau de communication.

**4.** Procédé (300) selon l'une des revendications précédentes,

la valeur de seuil de priorité ($p_{th}$) étant calculée à partir d'un taux d'occupation de canal (CBR), la valeur de seuil de priorité ($p_{th}$) augmentant et/ou diminuant avec le taux d'occupation de canal (CBR) ; et/ou
au moins une grandeur caractéristique statistique étant calculée à partir des valeurs de priorité des derniers segments de message transmis, la valeur de seuil de priorité ($p_{th}$) étant calculée à partir de la grandeur caractéristique statistique.

**5.** Procédé (300) selon l'une des revendications précédentes,
le taux de charge actuel du réseau de communication étant calculé sous la forme d'un débit de transmission de données actuellement disponible ($R_a$) d'un canal radioélectrique associé au réseau de communication à partir d'un taux d'occupation de canal (CBR) et d'un débit de transmission de données (R) du canal radioélectrique comme suit :

$$R_a = (1\ CBR) - R.$$

**6.** Procédé (300) selon la revendication 5,

la taille de message maximale ($M_{max}$) étant calculée comme suit :

$$M_{max} = R_a \cdot T,$$

T indiquant un temps depuis la dernière transmission d'un message (114) par le biais du canal radioélectrique.

**7.** Unité d'interprétation (108), qui est configurée pour mettre en œuvre le procédé (300) selon l'une des revendications précédentes.

**8.** Programme informatique qui, lorsqu'il est exécuté sur un processeur, met en œuvre le procédé (300) selon l'une des revendications 1 à 6.

**9.** Support lisible par ordinateur sur lequel est stocké un programme informatique selon la revendication 8.

**Fig. 1**

Fig. 2

EP 4 055 848 B1

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112017007365 T5

- WO 2019160176 A1

**In der Beschreibung aufgeführte Nicht-Patentliteratur**

- **LAURENS HOBERT et al.** Enhancements of V2X communication in support of cooperative autonomous driving. *IEEE Communications Magazine,* 2015, vol. 53 (12), 64-70
- **HENDRIK-JORN GÜNTHER et al.** Collective perception and decentralized congestion control in vehicular ad-hoc networks. *IEEE Vehicular Networking Conference (VNC),* 2016
- **M. SEPULCRE ; J. MITTAG ; P. SANTI ; H. HARTENSTEIN ; J. GOZALVEZ.** Congestion and Awareness Control in Cooperative Vehicular Systems. *Proceedings of the IEEE,* vol. 99 (7), 1260-1279

- **BENGI AYGUN ; MATE BOBAN ; ALEXANDER M. WYGLINSKI.** ECPR: Environment-and context-aware combined power and rate distributed congestion control for vehicular communications. *Computer Communications,* 2016, vol. 93, 3-16
- **C. B. MATH ; A. OZGUR ; S. H. DE GROOT ; H. LI.** Data Rate based Congestion Control in V2V communication for traffic safety applications. *2015 IEEE Symposium on Communications and Vehicular Technology in the Benelux (SCVT), Luxembourg City,* 2015, 1-6